Europäisches Patentamt

European Patent Office

Office européen des brevets

(11) Publication number: **0 321 030**
**A1**

## EUROPEAN PATENT APPLICATION

(21) Application number: 88202823.6

(22) Date of filing: 09.12.88

(51) Int. Cl.⁴: **D06F 37/00 , F16J 15/32**

(30) Priority: 15.12.87 IT 2287587 U

(43) Date of publication of application:
**21.06.89 Bulletin 89/25**

(84) Designated Contracting States:
**DE FR GB**

(71) Applicant: **N.V. Philips' Gloeilampenfabrieken**
**Groenewoudseweg 1**
**NL-5621 BA Eindhoven(NL)**

(72) Inventor: **Maretti, Silvano**
**c/o INT. OCTROOIBUREAU B.V. Prof.**
**Holstlaan 6**
**NL-5656 AA Eindhoven(NL)**
Inventor: **Gorini, Cesare**
**c/o INT. OCTROOIBUREAU B.V. Prof.**
**Holstlaan 6**
**NL-5656 AA Eindhoven(NL)**

(74) Representative: **Gorter, Willem Karel et al**
**INTERNATIONAAL OCTROOIBUREAU B.V.**
**Prof. Holstlaan 6**
**NL-5656 AA Eindhoven(NL)**

(54) Seal-joint member, particularly for a washing machine tub assembly.

(57) A seal member, particularly for a washing machine tub assembly, having an annular shape and comprising a metal core (2) partly clad with elastomer (3), said cladding (3) having on one side a ring of spacers (7) spaced equiangularly apart.

Fig.2

EP 0 321 030 A1

Xerox Copy Centre

**Seal-joint member, particularly for a washing machine tub assembly.**

This utility model relates to a seal member, particularly for a washing machine tub assembly.

A washing machine tub assembly is known to comprise essentially a tub with an open front end shaped to receive a door and arranged to contain and support a rotary drum which on its rear end, opposite that facing the front aperture of the tube, comprises a cross-shaped support member.

The rear end of the tub which supports the drum has a central hole allowing the passage of a shaft which is coupled to the cross-shaped support and linked to an electric drive motor. Rotation of this shaft results in the rotation of said cross-shaped support and consequently of the drum in which the laundry is inserted for its washing. The shaft is supported in the said hole through said end by normal bearings, such as ball or roller bearings.

In order to prevent damage from any leakage which may arise in the coupling region between the tub assembly and shaft, one or more gaskets or seal members (such as V rings) are inserted between the cross-shaped support and the rear end of the tub, before the bearing or bearings. These seal members are kept in the tightest possible contact with the cross-shaped support by bushes of steel or other material, which are interposed between said support and a bearing and are kept separated from said bearing by a suitable spacer.

In order to discharge any water which in spite of these precautions is able to pass through the seal members, a drainage channel is provided within the rear end of the tub. This channel collects any water which passes into the cavity occupied by the tub. In this manner the wafer falls onto the base of the washing machine housing along a selective path, without damaging any vital machine member.

However this method for maintaining the seal on the cross-shaped support is not perfect because it comprises different elements which have to be connected when the tub assembly is mounted on the drive shaft. Moreover, connecting together several elements increases the probability of unwanted leakages resulting from imperfect assembly of such elements.

The main object of the present utility model is therefore to provide a seal member which obviates the aforesaid problems. A further object is to provide a seal member which enables the cross-shaped support and bearing to be positioned relative to each other in a more simple and rapid manner, so as to reduce the time taken to assemble these components on the drive shaft.

These and further objects which will be more apparent to an expert of the art are attained by a seal member, particularly for a washing machine tub assembly, characterized by being of annular shape and comprising a metal core partly clad with elastomer, said cladding having on one side a ring of spacers angularly spaced apart.

Advantageously, the metal core is of L-shaped cross-section and one of its sides is at least partly free of elastomer.

The utility model will be more apparent from the accompanying drawing, which is provided for non-limiting illustration only and in which:

Figure 1 is a front view of the seal member according to the present utility model;

Figure 2 is a partial section on the line II-II of Figure 1;

Figure 3 is a detailed longitudinal sectional view of one application of the seal member of Figure 1 taken during the mounting of a tub assembly.

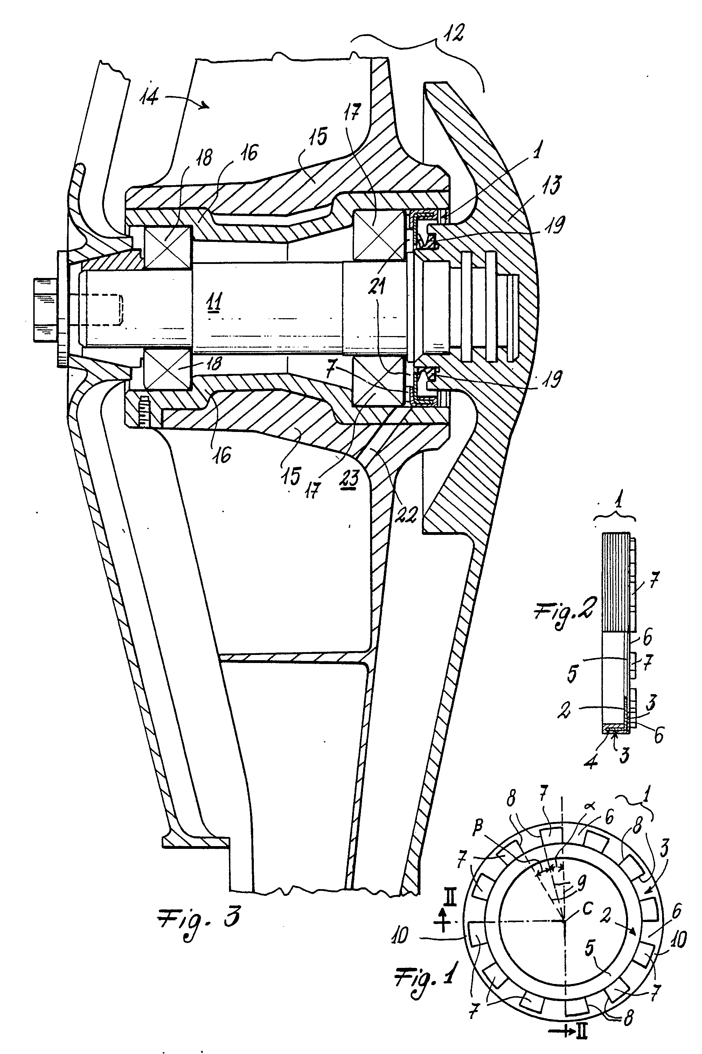

With reference to said figures, and in particular to Figures 1 and 2, the annular seal member, indicated overall by 1, comprises a metal core 2 partly clad with a layer 3 of elastomer, such as vulcanised rubber. Said metal core, advantageously of stainless steel construction, is of cylindrical shape (the shape therefore assumed by the entire seal member 1), and has an L-shaped cross-section in the form of an outer side 4 and a flange 5 facing the interior of the seal member. The side 4 is completely clad with the elastomer layer 3, whereas an upper portion 6 of the flange 5 is only partly clad therewith. A series of angularly equidistant spacers 7 project integrally from said upper portion 6 of the flange 5.

In the embodiment shown here by way of example only, the spacers 7 are shaped as portions of a circuit sector with their sides 8 ideally converging at the geometrical centre C of the flange 5, and with the sides 10 not coinciding with the outer perimeter of the seal member to allow evacuation of any water leakage even if one of the spacers 7 should coincide with the drainage channel 22. The extensions 9 of the sides 8 of each spacer 7 form an angle at the centre $\alpha$ which, in the example described herein, is equal to the angle $\beta$ at the centre between the extensions 9 of two dides 8 pertaining to two adjacent spacers 7 (see Figure 1).

Figure 3 shows a method of using the described seal member 1 of the present utility model.

In this figure the reference numeral 12 indicates a washing machine tub assembly. It comprises a cross-support 13 for a drum (not shown) and a tub 14 which contains said drum. The rear end of the tub 14 (for example of plastics material) comprises at its centre a hub carrier 15 and a hub 16 of die-cast aluminium mounted and fixed in the hub carrier 15. The hub 16 holds a pair of bearings 17, 18 which support a shaft 11 rigid with the cross-shaped support 13.

The bearings are spaced apart, the one closer to the cross-shaped support 13 being indicated by 17.

The seal member 1 is positioned in the hub 16 in contact with the bearing 17, with the spacers 7 facing this bearing. A conventional V ring 19 contained in a seat in the cross-shaped support 13 rests against that side of the flange 5 free of elastomer cladding, namely that opposite the side comprising the spacers 7.

Between the seal member 1 and bearing there therefore forms a cavity 21 from which there extends a drainage channel 22 which passes through the rear part of the tub 14 to the outside 23 thereof. The purpose of the channel 22 is to allow expulsion of any wash water which because of small leakages through the seal members 1 and 19, and in spite of their presence, reaches the cavity 21 and could be the cause of damage. Any water thus collected is discharged to the outside of the tub where there are no vital machine members.

## Claims

1. A seal member, particularly for a washing machine tub assembly, characterized by being of annular shape and comprising a metal core (2) partly clad with elastomer (3), said cladding (3) having on one side a ring of spacers (7) spaced equiangularly apart.

2. A seal member as claimed in Claim 1, characterized in that the metal core (2) has an L-shaped cross-section in the form of an outer side (4) and a flange (5) facing the interior of the seal member (1), said side (4) and at least a portion (6) of the flange (5) being clad with the elastomer layer (3).

EP 0 321 030 A1

Fig. 3

Fig. 2

Fig. 1

PHI 87-014

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 037 848 (THE MECHANEX CORP.)<br>* Column 3, lines 2-20; figures * | 1,2 | D 06 F 37/00<br>F 16 J 15/32 |
| X | US-A-3 086 781 (CHICAGO RAWHIDE MANUFACTURING CO.)<br>* Column 3, lines 57-75; figures * | 1,2 | |
| X | US-A-3 156 474 (CHICAGO RAWHIDE MANUFACTURING CO.)<br>* Figures 1,2 * | 1 | |
| A | GB-A-1 273 221 (AKTIEBOLAGET SVENSKA KULLAGERFABRIKEN)<br>* Figures 1,1b * | 1,2 | |
| A | FR-A-1 375 530 (SIEMENS-ELECTROGERÄTE AG) | | |
| A | FR-A-2 366 483 (INA ROULEMENTS SA) | | |
| | | | **TECHNICAL FIELDS SEARCHED (Int. Cl.4)**<br><br>D 06 F<br>F 16 J<br>F 16 C |

The present search report has been drawn up for all claims

| Place of search | Date of completion of the search | Examiner |
|---|---|---|
| THE HAGUE | 23-03-1989 | COURRIER,G.L.A. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

          

& : member of the same patent family, corresponding
   document

EPO FORM 1503 03.82 (P0401)